# EUROPEAN PATENT APPLICATION

(11) **EP 4 365 794 A1**
(43) Date of publication of application: **08.05.2024**
(21) Application number: 23202520.5
(22) Date of filing: 09.10.2023
(51) Int. Cl.: G06Q 10/0639

(54) **SYSTEM AND METHOD FOR WORKER RECOMMENDATIONS**

(30) Priority: 01.11.2022 US 202218051731
(71) Applicant: Honeywell International Inc., Charlotte, NC 28202 (US)
(72) Inventor: KHAN, Kalimulla, Charlotte, 28202 (US); JAYATHIRTHA, Srihari, Charlotte, 28202 (US); LINDSEY, Wade, Charlotte, 28202 (US); MILLER, Michael, Charlotte, 28202 (US)
(74) Representative: Haseltine Lake Kempner LLP

(57) **Abstract**

A method is disclosed for worker assessment and recognition, the method comprising receiving a value of at least one worker performance metric for a worker; receiving a value of at least one worker performance parameter for the worker; determining, using a trained machine-learning model, a worker score for the worker based on the value of the at least one worker performance metric and the value of the at least one worker performance parameter; determining a target score for the worker; comparing the worker score to the target score; and upon determining that the worker score is less than the target score, determining an instruction to perform a first action relative to the worker based on the machine-learning model; upon determining that the worker score is equal to or greater than the target score, determining an instruction to perform a second action relative to the worker based on the machine-learning model.

## Description

### TECHNICAL FIELD

The present disclosure relates generally to methods and systems to optimize operations in a workplace such as a warehouse, distribution center, airport ground operations, and retail generally.

### BACKGROUND

Labor costs are a significant contributor to the operational costs in any business operations environment. Efficient management of labor is essential for smooth functioning in the workplace as well as operational profitability. Large business operations employ a large workforce that may be working on multiple shifts, sites, and tasks. Efficient management of workers and their retention is an essential factor for the smooth functioning of day-to-day operations. Identifying and assessing worker performance, training needs, strengths and weaknesses and appropriately motivating, training, and re-allocating jobs may help maintain a healthy and efficient work environment and increase productivity and profitability.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY

According to certain aspects of the disclosure, systems and methods are disclosed for converting data from an external system to data to be used by an internal system.

In one aspect, an exemplary embodiment includes a computer-implemented method for machine-learning based worker performance assessment and recommendations, the method comprising: receiving, using at least one processor, a value of at least one worker performance metric for a worker; receiving, using the at least one processor, a value of at least one worker performance parameter for the worker; determining, using a trained machine-learning model, a worker score for the worker based on the value of the at least one worker performance metric and the value of the at least one worker performance parameter; determining, using the trained machine-learning model, a target score for the worker based on the value of the at least one worker performance metric and the value of the at least one worker performance parameter; determining, using the at least one processor, whether the worker score determined for the worker is less than, equal to, or greater than the target score determined for the worker; and upon determining that the worker score is less than the target score, determining an instruction to perform a first action relative to the worker based on the machine-learning model, and outputting to a real-time dashboard of a display the instruction to perform a first action; upon determining that the worker score is equal to or greater than the target score, determining an instruction to perform a second action relative to the worker based on the machine-learning model, and outputting to the real-time dashboard of the display the instruction to perform the second action.

In a further aspect, the at least one worker performance parameter is at least one factor that the trained machine-learning model identifies as one of a positive or negative contributor to the at least one worker performance metric.

In a further aspect, the at least one factor is one or more of worker experience, worker training, worker task preference, worker region preference, worker workload, weather data, economic data, and attrition rate.

In another aspect, the at least one factor comprises a plurality of factors, and the factors of the plurality of factors that are identified as negative contributors to the at least one worker performance metric are identified, the step of performing an instruction to perform a first action and the step of performing an instruction to perform a second action including an instruction to address the identified factors.

In a further aspect, the instruction to perform the first action and the instruction to perform the second action are determined by the trained machine-learning model to maximize worker retention and productivity.

In another aspect, the trained machine-learning model is configured to aggregate and analyze data from a plurality of sensor devices located throughout the warehouse and connected over a network and a plurality of worker computing devices, each worker computing device corresponding to at least one of a plurality of workers.

In a further aspect, the trained machine-learning model determines the plurality of worker performance metrics by aggregating and analyzing data from a plurality of connected warehouse service systems, a plurality of connected performance management systems, a connected labor management system (LMS), and a gateway device.

In yet another aspect, a computer system for machine-learning based worker performance assessment and recommendations is disclosed, the computer system comprising: a memory having processor-readable instructions stored therein; and one or more processors configured to access the memory and execute the processor-readable instructions, which when executed by the one or more processors configures the one or more processors to perform a plurality of functions, including functions for: receiving, using at least one processor, a value of at least one worker performance metric for a worker; receiving, using the at least one processor, a value of at least one worker performance parameter for the worker; determining, using a trained machine-learning model, a worker score for the worker based on the value of the at least one worker performance metric and the value of the at least one worker performance parameter; determining, using the trained machine-learning model, a target score for the worker based on the value of the at least one worker performance metric and the value of the at least one worker performance parameter; determining, using the at least one processor, whether the worker score determined for the worker is less than, equal to, or greater than the target score determined for the worker; and upon determining that the worker score is less than the target score, determining an instruction to perform a first action relative to the worker based on the machine-learning model, and outputting to a real-time dashboard of a display the instruction to perform a first action; upon determining that the worker score is equal to or greater than the target score, determining an instruction to perform a second action relative to the worker based on the machine-learning model, and outputting to the real-time dashboard of the display the instruction to perform the second action.

To the accomplishment of the foregoing and related ends, certain illustrative aspects are described herein in connection with the following description and the appended drawings. These aspects are indicative, however, of but a few of the various ways in which the principles of the claimed subject matter may be employed and the claimed subject matter is intended to include all such aspects and their equivalents. Other advantages and novel features may become apparent from the following detailed description when considered in conjunction with the drawings.

### BRIEF DESCRIPTION OF THE DRAWINGS

Embodiments of the disclosure will now be described, by way of example only, with reference to the accompanying drawings in which:
FIG. 1 is a schematic diagram illustrating an example environment implementing methods and systems of this disclosure.
FIG. 2A is a diagram of architecture of a connected warehouse system of this disclosure.
FIG. 2B is a diagram of a layout of a warehouse with the connected warehouse system of this disclosure.
FIG. 3 is a flowchart illustrating a method for optimizing operations of a job site.
FIG. 4 is a diagram of architecture of a system for worker assessment and recommendations.
FIG. 5 is a flowchart illustrating a method for worker assessment and recommendations.
FIG. 6A depicts an example user interface dashboard in a mode, according to an exemplary embodiment.
FIG. 6B depicts an example user interface dashboard in another mode, according to an exemplary embodiment.
FIG. 6C depicts an example user interface summary dashboard in yet another mode, according to an exemplary embodiment.
FIG. 7 depicts an example user enterprise warehouse management interface.
FIG. 8 is a diagram of architecture of a connected warehouse system of this disclosure.
FIG. 9 is a diagram of architecture of a workforce scorecard dashboard of a connected warehouse system of this disclosure.
FIG. 10 is a diagram of architecture of an individual worker scorecard dashboard of a connected warehouse system of this disclosure.
FIG. 11 is a diagram of architecture of a performance scorecard dashboard of a connected warehouse system of this disclosure.
FIG. 12 illustrates an exemplary device in which one or more embodiments may be implemented.

### DETAILED DESCRIPTION

The following embodiments describe systems and methods for facilitating a connected warehouse as between employees, managers, and other users. In particular, the following embodiments are directed to systems and methods for worker recommendations.

Efficient management of labor is essential for smooth functioning in the workplace as well as operational profitability. Large business operations employ a large workforce that may be working on multiple shifts, sites, and tasks. Efficient management of workers and their retention is an essential factor for the smooth functioning of day-to-day operations. Identifying and assessing worker performance, training needs, strengths and weaknesses and appropriately motivating, training, and re-allocating jobs may help maintain a healthy and efficient work environment and increase productivity and profitability. In such large operations, it may be difficult or inefficient for supervisors or managers to monitor in real time the performance of employees owing to the nature and size of operations. Workers may be working part-time, full-time or as contractors, and may work multiple sites and shifts with a variety of managers and supervisors, such that it is difficult for supervisors to have meaningful engagement with individual workers for purposes of addressing worker needs. Such lack of engagement may result in unproductive or unhappy workers leading to loss of productivity and reductions in retention. To address this gap, there is a need for an automated system to assess the worker performance, environment, engagement levels and recommend improvements for better worker engagement and to improve productivity.

A dynamic and decentralized technique for implementing a connected warehouse system is provided. An embodiment or implementation described herein as "dynamic" is intended to reflect or indicate that the embodiment(s) is or can be marked by continuous and productive activity or change, though not necessarily constantly changing. The system and corresponding techniques facilitate communications within one or more warehouses, between users (e.g., worker, teams of workers, manager, etc.), and between warehouses, third parties associated therewith, and data centers. Such communications may be facilitated by edge systems and gateway systems. The edge and gateway systems may be located in warehouses (i.e., on-site) as embedded or fixed systems and/or other user devices such as tablet PCs and mobile phones (e.g., devices controlled by or in communication with an operations manager, etc). Each edge system may be coupled to a warehouse system from which warehouse operations data may be collected, and in communication with other edge systems and gateway systems. Each gateway system may be in communication with warehouse operation systems and edge systems of the warehouse in which the gateway system is resident (e.g., with the operations manager), and may also be in communication with gateway systems located in other warehouses, all or some of which may provide data to the gateway system. By facilitating communication with gateway systems located in other warehouses, the gateway system may enable exchange of data among edge systems installed in different warehouses. Independent user computing devices, such as tablet PCs and mobile phones, may be directly coupled to and/or in communication with the edge systems and/or gateway systems, to request, filter, view, and/or analyze data.

Hardware for all or some of the edge systems and gateway systems may be installed in warehouses. Therefore, software may be installed on the corresponding warehouse hardware. The software implemented in the edge systems and gateway systems may comprise computer-executable code for performing various data functions, including but not limited to, data request, data query, data retrieval, data transmission, and data analytics. The edge systems and gateway systems each identify source(s) of relevant data, and request that data be provided dynamically (as needed) or statically (all the time) from the identified source(s), such as from other edge systems coupled to warehouse systems in the warehouse or other warehouses, gateway systems in the warehouse or other warehouses, decentralized system(s) such as cloud computing center(s), and centralized system(s) such as dedicated server farms. The decentralized system(s) and centralized system(s) may be owned by the operators of the warehouses, or by a third party such as a government or a commercial entity.

Each edge system in a warehouse may be coupled to a sensor of a corresponding warehouse system in the same warehouse, enabling data captured by the sensor to be provided directly to the edge system. Also, a gateway system in a warehouse may be coupled to one or more sensors of warehouse systems in the same warehouse, enabling data captured by the one or more sensors to be provided directly to the gateway system. In another embodiment, each edge system in a warehouse may be coupled to warehouse system of a corresponding warehouse system in the same warehouse. Also, a gateway system in a warehouse may be coupled to warehouse system machines of warehouse systems in the same warehouse. In some aspects, warehouse system machines may be configured to collect data from the coupled one or more sensors, perform computations and/or analysis of the collected data, store the collected and/or analyzed data in memory, and provide the collected and/or analyzed data to one or more connected edge systems and/or gateway system. In some embodiments, the warehouse system may not be implemented, or may not be coupled to the one or more sensors of the warehouse system. If the warehouse system machine is not implemented or not coupled to the one or more sensors, data captured by the one or more sensors may be provided directly to the one or more connected edge systems and/or gateway system.

Each warehouse system may be in communication with, through an edge system or not, a gateway system. Edge systems in a warehouse may be in direct communication with one another. For example, any data retained by one edge system may be transmitted directly to another edge system within the same warehouse, without a gateway system acting as an intermediary. In another embodiment, an edge system may send to or receive data from another edge system located in the same warehouse through a gateway system. The communication between the edge systems and the communication between the edge systems and the gateway system may be through a wired or wireless connection.

A gateway system of a warehouse may be in communication with gateway systems of other warehouses. Through this communication path, an edge system or a gateway system of a warehouse may transmit data to and obtain data from edge systems or gateway systems of other warehouses. The communication path between gateway systems of different warehouses may be through satellite communications (e.g., SATCOM), cellular networks, Wi-Fi (e.g., IEEE 802.11 compliant), WiMAx (e.g., AeroMACS), optical fiber, and/or air-to-ground (ATG) network, and/or any other communication links now known or later developed. An edge system in a warehouse may communicate with another edge system in a different warehouse via gateway systems of the respective warehouses. For example, an edge system in a warehouse may transmit data to one or more edge systems in other warehouses via the gateway systems of the respective warehouses communicating over the communication path discussed above.

Each edge system and gateway system may comprise state machines, such as processor(s) coupled to memory. Both the edge systems and the gateway systems may be configured with a common operating system to support portable, system-wide edge software implementations. In other words, each of the edge systems and the gateway systems may be equipped with standard software to facilitate inter-operability among the edge systems and the gateway systems. In the discussion below, such software will be referred to as edge software. The edge software may enable each edge system or gateway system to perform various functions listed below (non-exhaustive) to enable data analysis and data exchange among the various systems illustrated herein (e.g., edge systems, gateway systems, warehouse operations centers, remote systems):
- Filter and analyze real-time and stored data collected from other edge systems, warehouse systems, gateway systems, and/or operations center(s), and generate events based on the analysis;
- Identify dynamic (i.e., as needed) and static (i.e., all the time) data transmission targets (e.g., edge systems within the same warehouse, edge systems in other warehouses, operations center(s));
- Transmit data over an Internet connection to the operations centers;
- Provide a request/response interface for other edge/gateway systems, warehouse borne computer systems, operations centers, and remote systems connected over wired/wireless networks or Internet to query the stored data and to dynamically select/change data filters;
- Use request/response interfaces provided by other edge systems, gateway systems, and operations centers connected over wired/wireless networks or Internet to obtain data and to dynamically select/change data filters;
- Receive events from other edge systems, gateway systems, and operations centers; and
- Specify and communicate generic purposes (i.e., types of data the edge/gateway system is interested in) to other edge systems, gateway systems, and operations centers.

Each edge system or gateway system may autonomously select and deliver data to one or more transmission targets, which may be other edge systems in the same warehouse, edge systems in other warehouses, gateway system in the same warehouse, gateway systems in other warehouses, or operations center(s). Each of the receiving edge or gateway systems (i.e., transmission targets) may be configured to filter the received data using a pre-defined filter, overriding the autonomous determination made by the edge system transmitting the data. In some embodiment, each receiving edge or gateway system may notify the other systems, in advance of the data transmission, of the types of data and/or analysis the receiving system wants to receive (i.e., generic "purposes"). Also, each edge or gateway system may maintain a list including static data transmission targets (transmission targets that always need the data) and dynamic data transmission targets (transmission targets that need the data on as-needed basis).

A gateway system of a warehouse may also be in communication with one or more operations centers, which may be located remotely from the warehouse (i.e., off-site). In some embodiments, however, the operations center(s) may be located on-site at the warehouse. Each of the warehouse systems of this disclosure may be implemented in a dedicated location, such as a server system, or may be implemented in a decentralized manner, for example, as part of a cloud system. The communication path between the gateway systems and the operations center(s) may be through satellite communications (e.g., SATCOM), cellular networks, Wi-Fi (e.g., IEEE 802.11 compliant), WiMAx (e.g., AeroMACS), optical fiber, and/or air-to-ground (ATG) network, and/or any other communication links now known or later developed.

Subject matter will now be described more fully hereinafter with reference to the accompanying drawings, which form a part hereof, and which show, by way of illustration, specific exemplary embodiments. An embodiment or implementation described herein as "exemplary" is not to be construed as preferred or advantageous, for example, over other embodiments or implementations; rather, it is intended reflect or indicate that the embodiment(s) is/are "example" embodiment(s). Subject matter be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware or any combination thereof (other than software per se). Furthermore, the method presented in the drawings and the specification is not to be construed as limiting the order in which the individual steps may be performed. The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" or "in some embodiments" as used herein does not necessarily refer to a different embodiment. It is intended, for example, that claimed subject matter include combinations of exemplary embodiments in whole or in part.

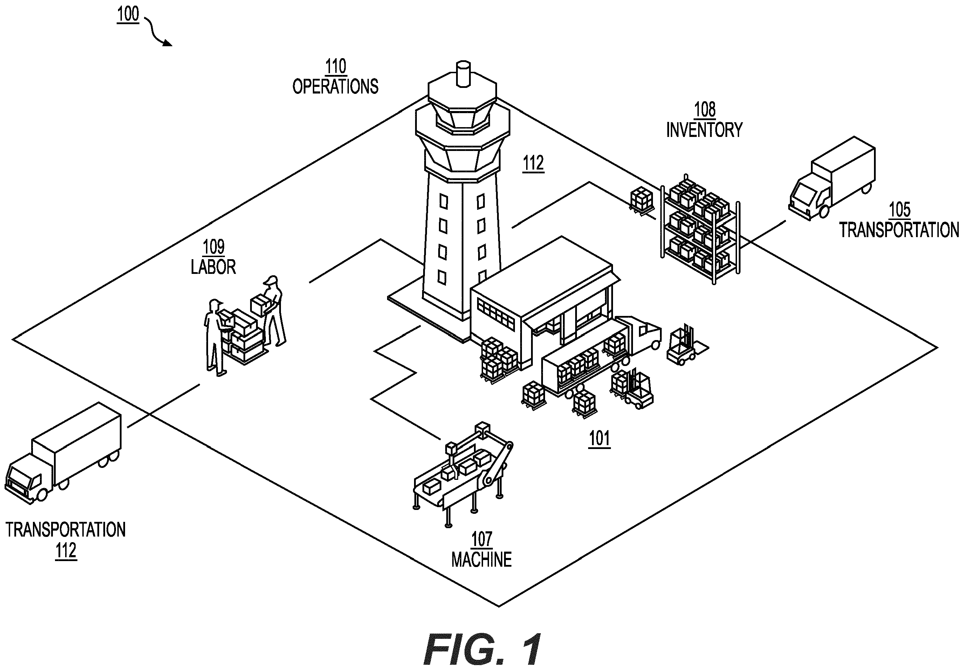

FIG. 1 illustrates an exemplary worksite, warehouse and/or distribution center environment 100 with certain components, including delivery transportation 105 (e.g., supply chain delivery truck) to load into inventory 108. An operational control tower 112 may monitor and/or otherwise control operations 110 within environment 100. Operations 110 can be performed and/or managed by labor 109. Operations 110 can include loading 101 and assembly machines 107. Once assembled, packaged, and otherwise processed for distribution, transportation 116 (e.g., a freight truck) can be loaded by labor 109 and depart for its subsequent destination. The environment 100 is configured to optimize worker performance by selectively scheduling and assigning tasks and worker equipment, as discussed more particularly below. The term "worker" can be understood as a human, a non-human animal (e.g., a trained animal such as a dog) or any other asset that performs tasks at a job site (e.g., a robotic device).

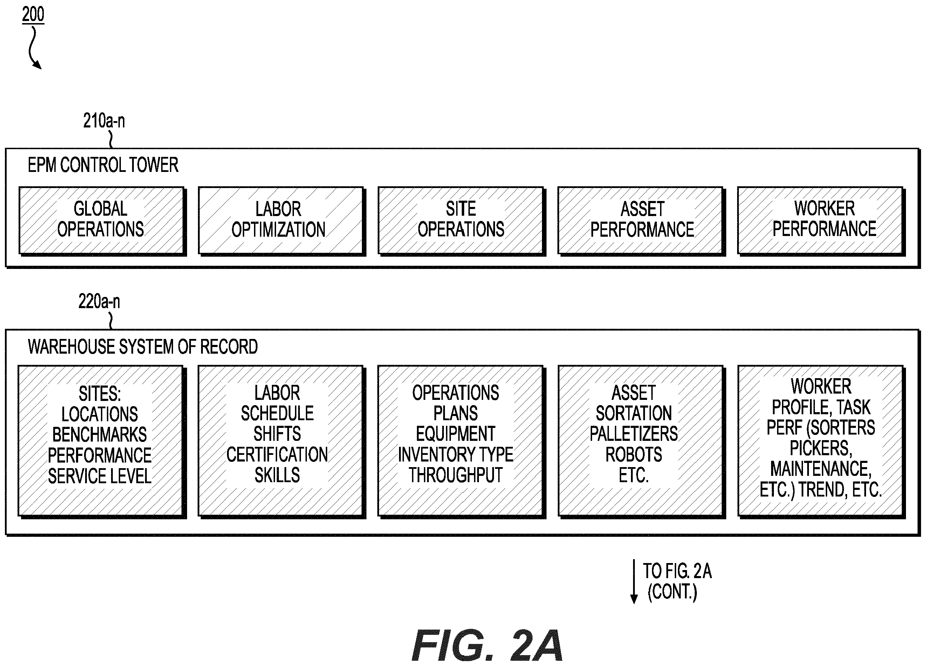

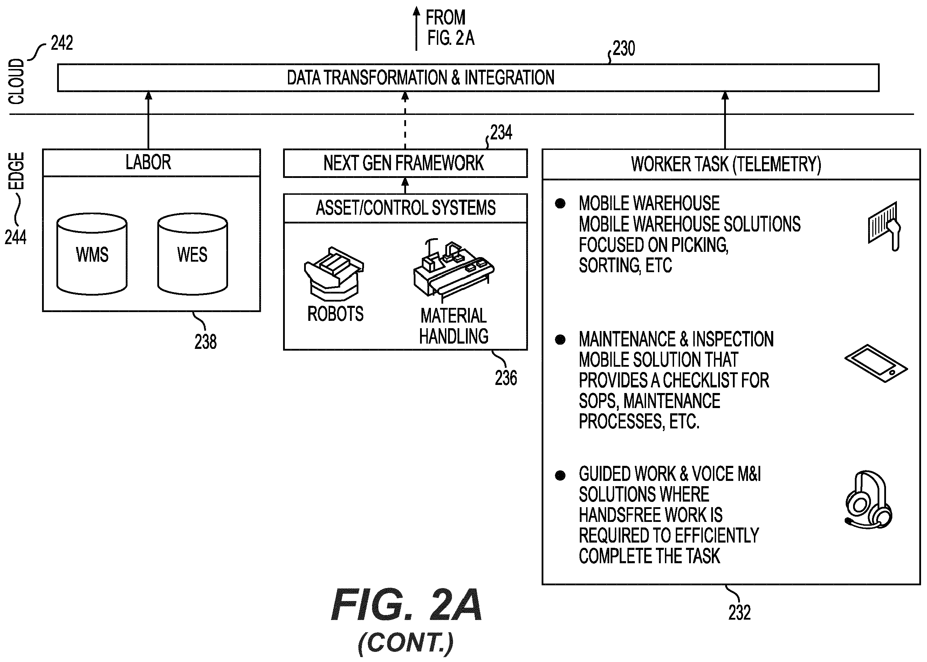

FIG. 2A is a diagram of architecture associated with of a connected warehouse system 200 of this disclosure. System 200 can include enterprise performance management (EPM) control tower 210a-n, including components and databases such as but not limited to global operations, labor optimization, site operations, asset performance, and worker performance. System 200 can also include a networked warehouse system of record 220a-n, including components and databases such as but not limited to sites (e.g., locations, benchmarks, performance service level, etc.), labor (e.g., schedule, shifts, certification, skills, etc.), operations (e.g., plans, equipment, inventory type, throughput, etc.), assets (e.g., sortation, palletizers, robots, etc.), and workers (e.g., trends, profiles, task performance such as sorters, pickers, maintenance works, etc.). EPM control tower 210a-n and networked warehouse system of record 220a-n can reside in a cloud based computing system 242 (e.g., a cloud computing network, one or more remote servers) and be communicatively coupled to a data transformation and integration layer 230.

System 242 may be communicatively coupled to an edge computing system 244. System 244 can be an edge computing system or node with a dedicated unit onsite at the work site (e.g., factory, distribution center, medical facility, retail outlet, warehouse, etc.). System 244 can be configured to process data and information from labor database 238, asset control systems 236 (e.g., components related to control of robots, material handling, etc.) and worker tasks database 232. Database 238 can include databases for warehouse management services (WMS) and warehouse execution systems (WES).

Database 232 can include one or more telemetry components operatively coupled to features of distribution center environment 100 so as to process and transmit control information generated subscribing to incoming control information for consumption by one or more controllers of system 240 over a network. Database 232 can be configured for data validation and modification for incoming telemetry or attributes before saving to the database; copy telemetry or attributes from devices to related assets so you can aggregate telemetry, e.g., data from multiple subsystems can be aggregated in related asset; create/update/clear alarms based on defined conditions; trigger actions based on edge lifecycle events, e.g., create alerts if device is online/offline; load additional data required for processing, e.g., load threshold value for a device that is defined in a user, device, and/or employee attribute; raise alarms/alerts when complex event occurs and use attributes of other entities inside email template; and/or consider user preferences during event processing. In some aspects, messages transmitted from database 232, such as triggers and/or alerts, can be configured for transmitting information to an end user (e.g., site lead, crew in the control tower, etc.) for optimization purposes. System 200 can also be configured to detect near accidents or other misses to build a trend model for early detection of anomalies before faults or malfunctions occur increasing safety. In some aspects, the trend model can perform statistical analysis of worker trends including assigned tasks, event datasets to derive insights on worker performance considering the nature of work, skillset, criticality, labor intensity, etc. In some aspects, the trend model can classify data on a variety of key performance parameters to generate reports, dashboards, and insights that can be presented to users. In some aspects, the trend model can determine benchmarks based on statistics for type of task, skill set, geographical location, industry etc. to enable performance-based assessment, incentives and target setting for worker operations.

Database 232 can include mobile warehouse solutions focused on picking, sorting, and other such tasks. Database 232 can include maintenance and inspection components configured to provide one or more checklists with standard operating procedures (SOPs), maintenance processes, and the like. Database 232 can include guided work and voice maintenance and inspection components configured where hands-free work is required by employees to complete a task.

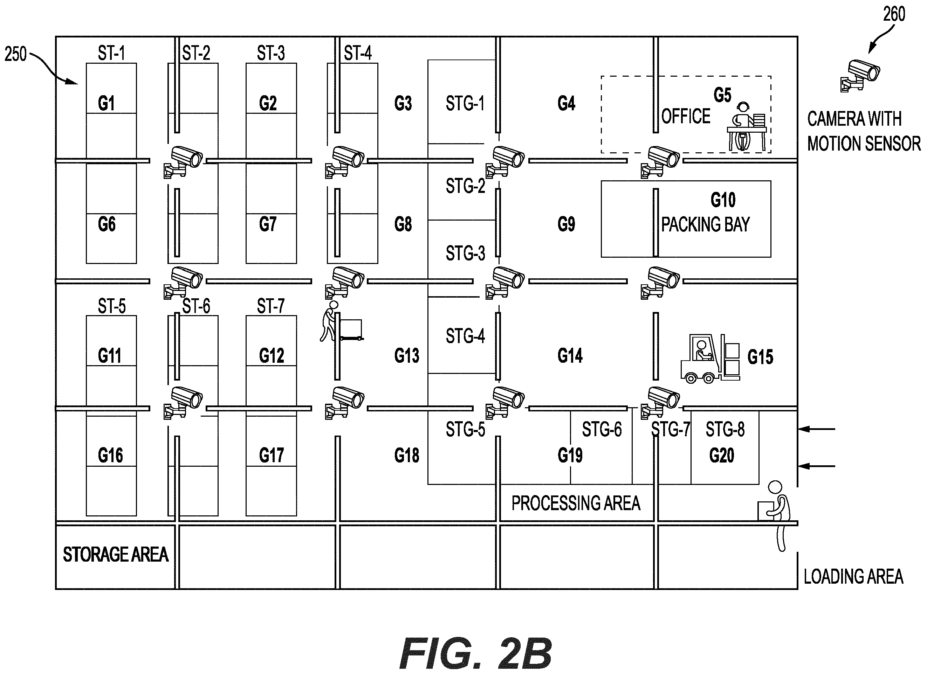

FIG. 2B is a diagram of layout of a worksite with the connected warehouse system described in FIG. 2A. The worksite includes a job site 250 that may comprise, for example, a storage area, a processing area, a loading area, a packing bay, and an office. Workers are generally situated in the storage area, the processing area, the loading area, or the packing bay, depending on their assigned tasks. Meanwhile, managers and supervisors will generally be in the office away from at least a majority of the workers. As such, managers and supervisors may have difficulty directly evaluating the engagement of their workers.

The warehouse system 200 described in FIG. 2A may be used to evaluate the engagement of workers against their assigned tasks using a variety of sources including voice input, scanning, device usage, network activity, location-based events, visual recognition events. The input from these sources may be fed to algorithms that identify cases where workers are not fully engaged or not making expected progress against their assignments or tasks.

The system 200 employs a plurality of methods to track the real-time progress of the tasks. The system interfaces with external systems to track the engagement levels of the workers on a real-time basis at any given time. This includes tracking specific task scheduled start times, the progress of the task after it has commenced, and a completion of the task. The warehouse layout may be equipped with motion sensor cameras 260 at strategic locations to monitor the movement of workers and materials in the warehouse. Each task is broken down to various stages and each stage associated with desirable time for completion. The time duration of each stage would be based on historic performance of workers, distance or level of effort involved and company or regulatory practices or policies. The motion sensing camera's capture the worker and material movement and automatically compute the status of the task based on the position of the worker and the materials. The worker may also be provided with voice or PED based application that tracks and collects information directly from the worker on the progress made.

Because the system 200 also interfaces with external systems for real-time tracking of other events, anomalies or failures in the business environment which potentially impact the productivity of the worker, the system 200 may include an algorithm to identify idle or unproductive workers and compare to events that may impact their tasks. If there is no event identified that may explain a worker's idleness, a communication may be triggered to the worker to identify whether there has been a localized or personal incident, such as a medical event or fatigue.

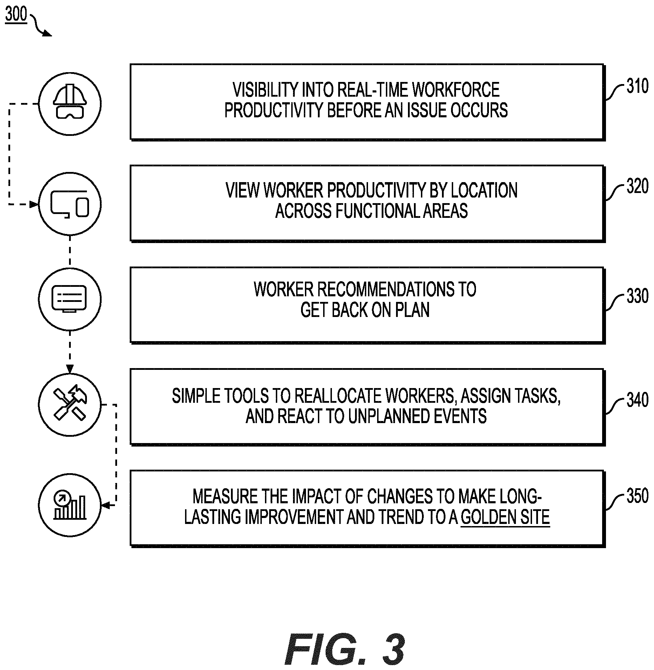

FIG. 3 is a flowchart illustrating a method 300 for optimizing operations of a job site. In step 310, the method can include providing visibility into real-time workforce productivity. In step 320, the method can include viewing worker productivity by location across functional areas. In step 330, the method can include providing worker recommendations to return to a worker plan. In step 340, the method can include providing tools to reallocate workers, assignment tasks, react to unplanned events. In step 350, the method can include measuring the impact of changes to make persistent improvement and trend to an optimized job site.

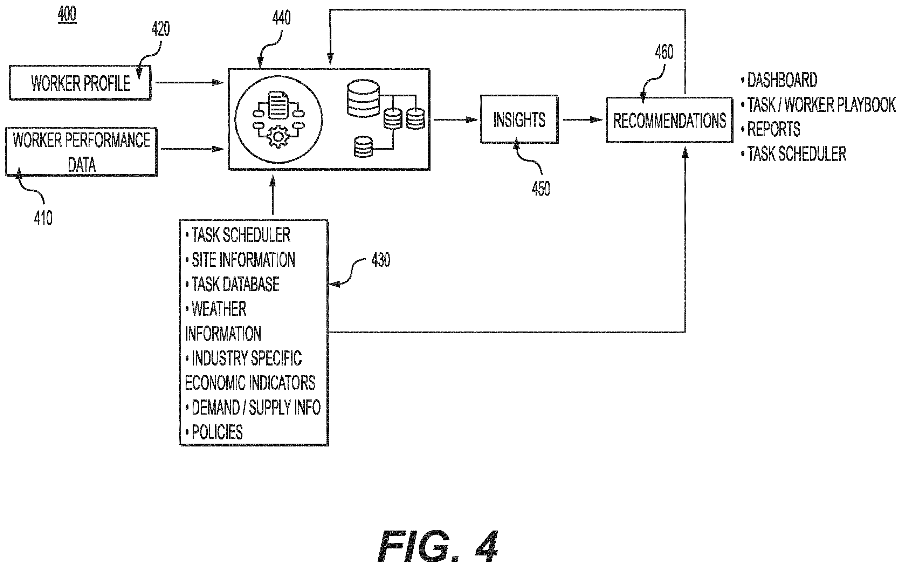

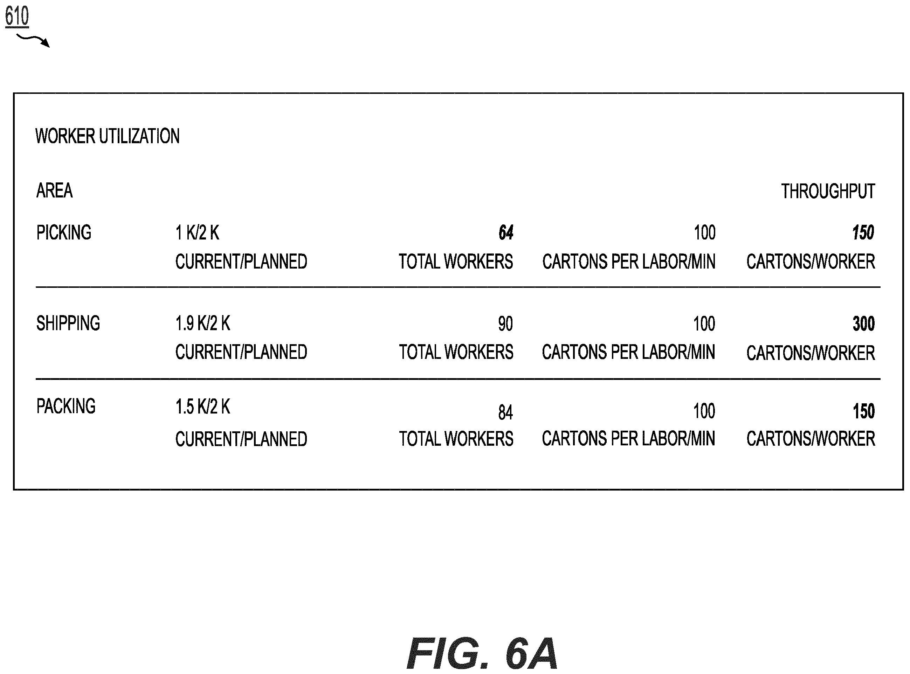

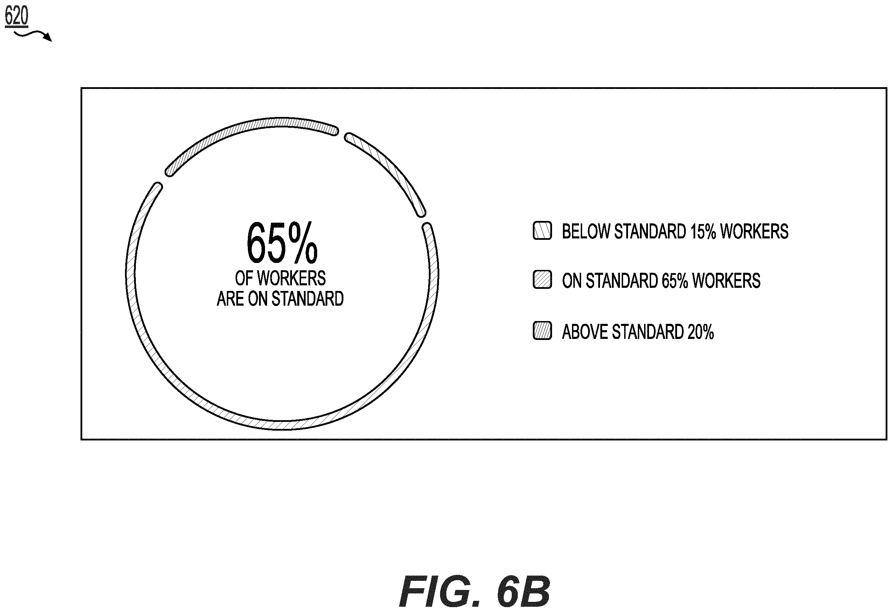

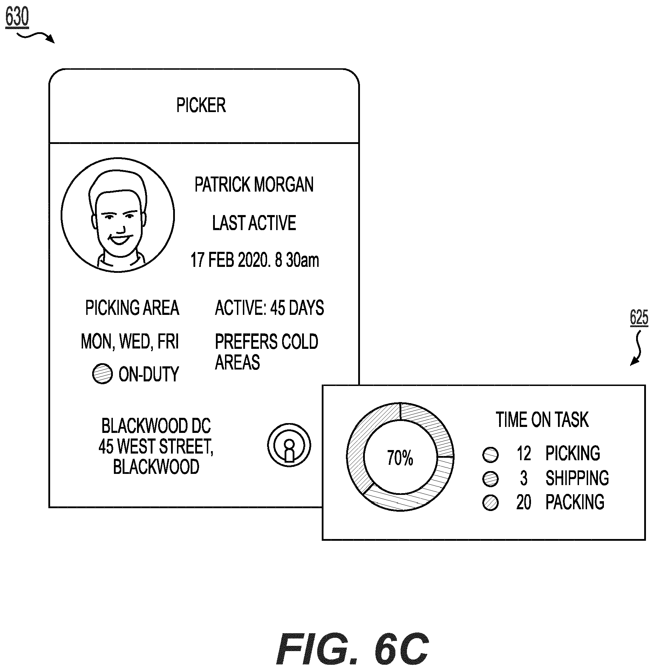

FIG. 4 describes the architecture of a system 400 for worker assessment and recommendations that may be used to achieve at least one aspect of the method steps described in FIG. 3. The system 400 for worker assessment and recommendations includes an assessment model 410 that receives as inputs worker performance data 420, a worker profile 430, and meta data 440 regarding the working conditions. The worker performance data 420 may include a worker score from a worker scorecard as described in FIGS. 6-10. The worker profile 430 provides parameters such as worker experience, worker training history, worker tasks, worker region, and a plurality of worker preferences such as shifts, location, etc. The meta data 440 includes parameters that are not necessarily worker specific bud may be identified by the assessment model 410 as affecting worker performance. This meta data may include information about the geographic location, the nature of the tasks at the location, workload throughout the worker's site, weather trends, economic trends, demand and/or supply trends, attrition rates, company policies, etc. The parameters from the worker profile 430 and the meta data 440 are given coefficients and values and are likewise input into the assessment model 410.

The assessment model 410 may deploy machine learning techniques, such as linear regression, logistical regression, random forest, gradient boosted machine (GBM), and/or a deep neural network. Supervised or unsupervised training may be employed. For example, unsupervised approaches may include K-means clustering. K-Nearest Neighbors may also be used, which may be supervised or unsupervised. Combinations of K-Nearest Neighbors and an unsupervised cluster technique may also be used. Any of the N variables from the data received from 420-440 (or derived therefrom) may correspond to a dimension in the model. As the machine learning system is trained, negotiation terms that have been successful in the past may form clusters in N-dimensional space. When the predictive engine ultimately makes a forecast and/or recommendation, as will be discussed further below, data from the current negotiation may be fed to the machine learning system, for example, as an N-dimensional vector. Whatever clusters in the model are closest to the current terms in N-dimensional space, and the outcomes associated therewith, may determine whether the negotiation is likely to be successful, may help suggest modifications, etc.

The trained machine learning model may be of any suitable form, and may include, for example, a neural network. A neural network may be software representing a human neural system (e.g., cognitive system). A neural network may include a series of layers termed "neurons" or "nodes." A neural network may comprise an input layer, to which data is presented, one or more internal layers, and an output layer. The number of neurons in each layer may be related to the complexity of a problem to be solved. Input neurons may receive data being presented and then transmit the data to the first internal layer through the connections' weight. The trained machine learning algorithm may include a convolutional neural network (CNN), a deep neural network, or a recurrent neural network (RNN).

(34) A CNN may be a deep and feed-forward artificial neural network. A CNN may be applicable to analyzing visual images, such as the one or more images of the captured traffic data, described elsewhere herein. A CNN may include an input layer, an output layer, and multiple hidden layers. Hidden layers of a CNN may include convolutional layers, pooling layers, or normalization layers. Layers may be organized in three dimensions: width, height, and depth. The total number of convolutional layers may be at least about 3, 4, 5, 10, 15, 20 or more. The total number of convolutional layers may be at most about 20, 15, 10, 5, 4, or less.

Convolutional layers may apply a convolution operation to an input and pass results of a convolution operation to a next layer. For processing images, a convolution operation may reduce the number of free parameters, allowing a network to be deeper with fewer parameters. In a convolutional layer, neurons may receive input from only a restricted subarea of a previous layer. A convolutional layer's parameters may comprise a set of learnable filters (or kernels). Learnable filters may have a small receptive field and extend through the full depth of an input volume. During a forward pass, each filter may be convolved across the width and height of an input volume, compute a dot product between entries of a filter and an input, and produce a 2-dimensional activation map of that filter. As a result, a network may learn filters that activate when detecting some specific type of feature at some spatial position as an input.

An RNN may be configured to receive sequential data as an input, such as consecutive data inputs, and the RNN may update the internal state at every time step. An RNN can be applicable to tasks such as image captioning or time series anomaly detection. The RNN may include a fully recurrent neural network, independently recurrent neural network, Jordan networks, Echo state, neural history compressor, gated recurrent unit, multiple timescales model, differentiable neural computer, or any combination thereof.

A relationship is established between one or more parameters and the worker performance. Insights (Positive and Negative) are derived from the relationship model and the parameters leading to negative impact are isolated and recommendations derived to address them. The overall assessment provides an outcome F(N), which is a worker score as a function of the plurality of parameters. The overall assessment provides an F (N opt) - which is a target score, or an optimum value combination as a function of the plurality of parameters.

For each Individual and/or a group of workers the engine provides whether there is any adjustment scope which can enhance the retention and productivity of the worker. This determination is based on historical data analysis, as well as a specific working model developed to replicate the worker performance and contributing parameters in assessment model 410.

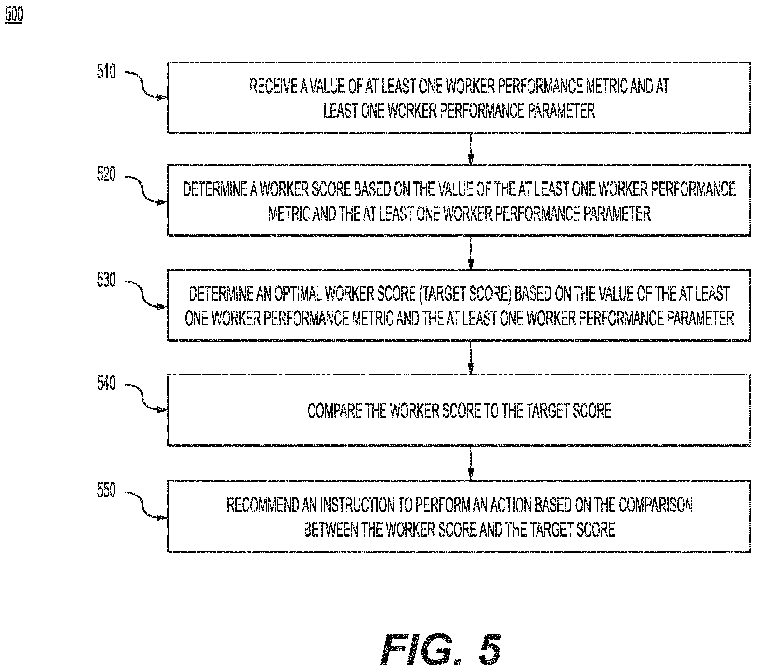

FIG. 5 depicts an exemplary flow chart of a method 500 for a method for worker assessment and recommendations, according to one or more embodiments. The steps described in the method 500 may correspond to the discussion above with regards to FIG. 4. The method 500 may begin at step 510 where a value of at least one worker performance metric and at least one worker performance parameter may be received. At step 520, a determination may be made of a worker score based on the value of the at least one worker performance metric and the at least one worker performance parameter, the metrics and parameters being described above with regards to FIG. 4. At step 530, an optimal worker score (or target score) is determined based on the value of the at least one worker performance metric and the at least one worker performance parameter. At step 540, the worker score and the target score are compared to determine whether the worker score determined for the worker is less than, equal to, or greater than the target score determined for the worker. At step 440, an instruction to perform an action is recommended based on the comparison between the worker score and the target score. Upon determining that the worker score is less than the target score, an instruction to perform a first action is made relative to the worker and output to a real-time dashboard of a display. Upon determining that the worker score is equal to or greater than the target score, an instruction to perform a second action is made relative to the worker and output to a real-time dashboard of a display. The real-time dashboard is described in more detail in FIGS. 6-10.

By way of example, the first action may be a recommendation for more training, or for a reallocation of the worker to a site or task that is more conducive to their strengths and preferences based on the worker parameters. If the worker score is lower than optimal because the worker is deemed to be overworked, the recommendation may be a reduction in hours or increases in break time. The second action may be a recommendation for a reward or a rate hike to ensure retention of productive and otherwise high scoring workers, and may also lead to morale and productivity increases. However, the assessment may also provide the insight that the worker may be more productive or more likely to be retained if the worker's task was switched, and would then make that recommendation.

For continuous improvement of the assessment model, the system devises a record of all assessments and effectiveness of the recommendations identifying key contributors to both positive and negative outcomes. The assessment also incorporates worker feedback to further tune the recommendations. The outcome of this assessment model is used in future assessments to add new meta data or to adjust the significance of existing meta data to worker performance in a continuously updated process.

A dashboard of the worker performance and improvement areas for productivity including effectiveness of previous actions are presented to a supervisor for effective engagement with workers including performance assessment, retention plans, task/schedule management etc. This system can be used by supervisors to enhance productivity of operations by taking objective decisions related to worker engagement, compensation, and training needs. Furthermore, the proposed solution can be integrated with external systems via APIs to trigger actions based on recommendations, as further discussed in FIGS. 6-10.

FIG. 6A is an example user interface dashboard 610 associated with the worker performance database of EPM control tower 210a-n. As shown, dashboard 610 can present information related to overall worker utilization including utilization from a plurality of locations (e.g., picking location, shipping location, packing location, etc.) of a job site and/or multiple job sites. Dashboard 610 can present inferences from processed data associated with the plurality of locations, including operational status as to current and planned events, total workers, labor efficiency rates (e.g., cartons per labor/min) and effective throughput metrics (e.g., cartons / worker or some other worker specific metric to measure performance). The information presented in dashboard 610 can be presented in any number of ways, including color coded (e.g., red for events that require immediate attention, green for metrics that are in excess of an objective goal, grey for events that are neutral or within a range of compliance for an objective goal, etc.).

FIG. 6B is an example user interface dashboard 620 associated with the worker performance database of EPM control tower 210a-n. As shown, dashboard 620 can present information related to worker performance. Through dashboard 620, a user can observe real-time performance, how current performance measures against objective planned performance goal(s), object measures of worker engagement, and or the like. In some aspects, one or more alerts can be presented or otherwise pushed onto dashboard 620 instructing a user (e.g., an employee, a manager, etc.) to take one or more corrective actions to improve productivity (e.g., return to a task, improve one criteria of a task that is lacking, improve engagement in an area of engagement, etc.) of one or more operational disruptions. in some aspects, corrective actions can include determining the right worker for a particular task based on the worker's profile and/or preferences, including job location or zone with job location, physical demand, temperature, shift, seniority, performance against the necessary tasks etc. to inform recommendations to move workers from area to another to mitigate attrition and maximize worker satisfaction. In some aspects, the one or more messages include workplace hazard avoidance, employee efficiency, work area efficiency, worker performance metrics, and worker performance safety. In some aspects, messages transmitted in or by dashboard 620, such as triggers and/or alerts, can be configured for transmitting information to remote computing systems, locations, and/or other interested users. Dashboard 620 can also be configured to detect near performance misses, trends, or other performance related events to build a trend model for early detection of anomalies before performance faults or malfunctions occur increasing worker engagement and performance.

Dashboard 620 can present worker performance summaries from processed data associated with a worker or plurality of workers, including operational status as to the worker or plurality of workers being below standard, on standard, above standard, etc. Other metrics and/or alerts can be presented in dashboard 620, including information related to location or worker area and metrics related thereto as to workers performing below, at, or above standard (e.g., a message can indicate that 10 workers in a location are performing below standard, a message can recommend to move a specific employee to another location, etc.). The information presented in dashboard 620 can be presented in any number of ways, including color coded (e.g., red for worker(s) who are performing below standard, green for worker(s) who are performing above standard, blue for worker(s) who are performing on standard, etc.).

FIG. 6C is an example user interface summary dashboard 630 associated with the worker performance database of EPM control tower 210a-n. As shown, dashboard 630 can be in communication with an insight module to present summary information related to a worker scorecard. Through dashboard 630, a user can observe or otherwise track performance metrics of interest, including but not limited to worker productivity, and match preferences of a respective worker to work-related tasks. By so dynamically matching, churn or wasteful time allocation can be minimized, and insights into worker coaching-related needs can be determined. As can be seen, dashboard 630 can present information such as worker name, worker address, worker status (e.g., on duty, off duty, etc.), schedule summary (e.g. at a location on Monday, Wednesday, and Friday), how long the worker has been active in the system, worker preferences, and worker job title.

In some aspects, a user can toggle dashboard 630 to investigate more information related to the user previously summarized in dashboard 630 to initiate presentation of dashboard 635. Dashboard 635 can include more real-time task-related performance metrics, such as specific metrics (e.g., minutes or percentage of shift time) the respective worker has dedicated doing specific tasks (e.g., picking, shipping, packing, etc.) across a period of time (e.g., a shift, a day, a week, a year, an entirety of the worker's time spent with a company, etc.). In some aspects, dashboards 630 and 635 facilitate tracking top performing workers as well as outlier poorer performance performances according to certain metrics (e.g., worker area, specific tasks, time allocation management, etc.). The information presented in dashboards 630 and 635 can be presented in any number of ways, including color coded similar to other previous dashboards of this disclosure.

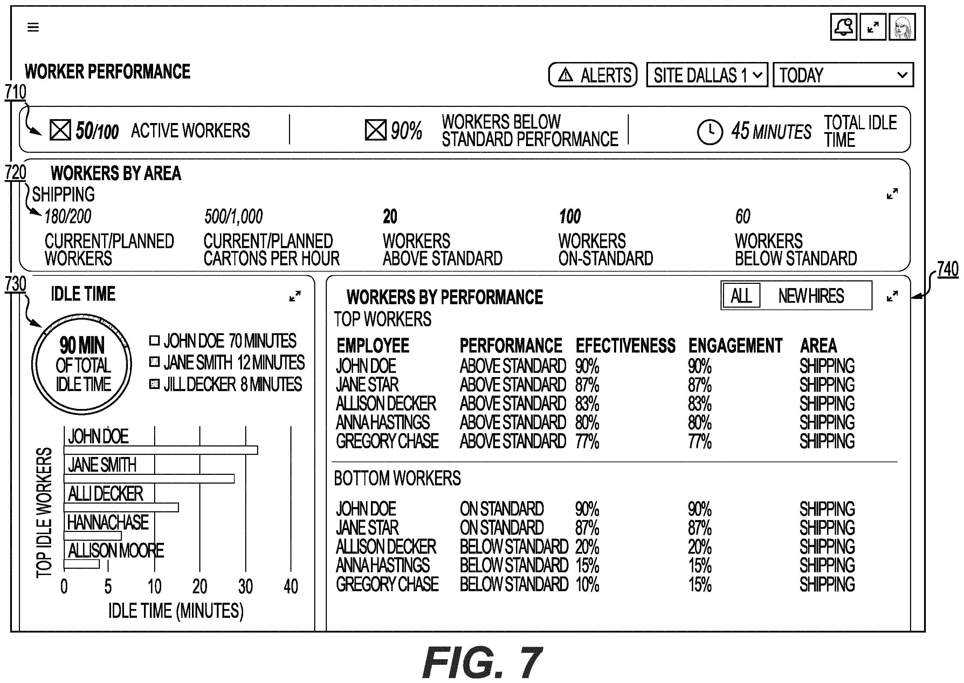

FIG. 7 depicts an example user enterprise warehouse management interface 700. In certain aspects, each of the dashboards of interface 700 can be positioned as tiles capable of being toggled to enlarge or otherwise accessed by user. Interface 700 can also present sub-dashboards such as ones configured to present work risk summaries (e.g., with names, risk percentage, and worker area), total numbers of workers, performance status indicators, overall labor, labor utilization, and/or the like. Interface 700 can also include a dashboard directed towards summarizing worker opportunities by area and recommendations for potential workers in respective areas. Interface 700 can also include a notification dashboard with filter options, event logs, and a presentation of notifications compliant with user-selected or system-selected notification filter and/or notification settings. In some aspects, interface 700 can present summaries of resources against a set of tasks that need to be executed. For example and without limitation, based on the workflow lifecycle, interface 700 can be configured to transmit to connected workers a queue of one of more tasks based on the operations of the overall system. The queue can be available so that when a respective worker successfully completes a task, one or more subsequent tasks are presented.

Furthermore, interface 700 can be configured to communicate an idle worker summary, such as a dashboard 710 showing real-time statistics about the total number of workers available and the total number of workers idle, the percentage of idle time per worker, and the total amount of idle time accumulated so far for the work period. Dashboard 720 may show the real-time number of current workers in an area, and the planned number of workers in that area, and of those workers how many are above or below a standard idle time. Dashboard 730 may provide a more focused view of total idle team for a specific subset of workers, and may be toggled between top idle time per worker and least idle time per worker, again shown in real-time. Dashboard 740 may provide a more detailed list of idle time per worker, with information about departments or areas of workers, for example.

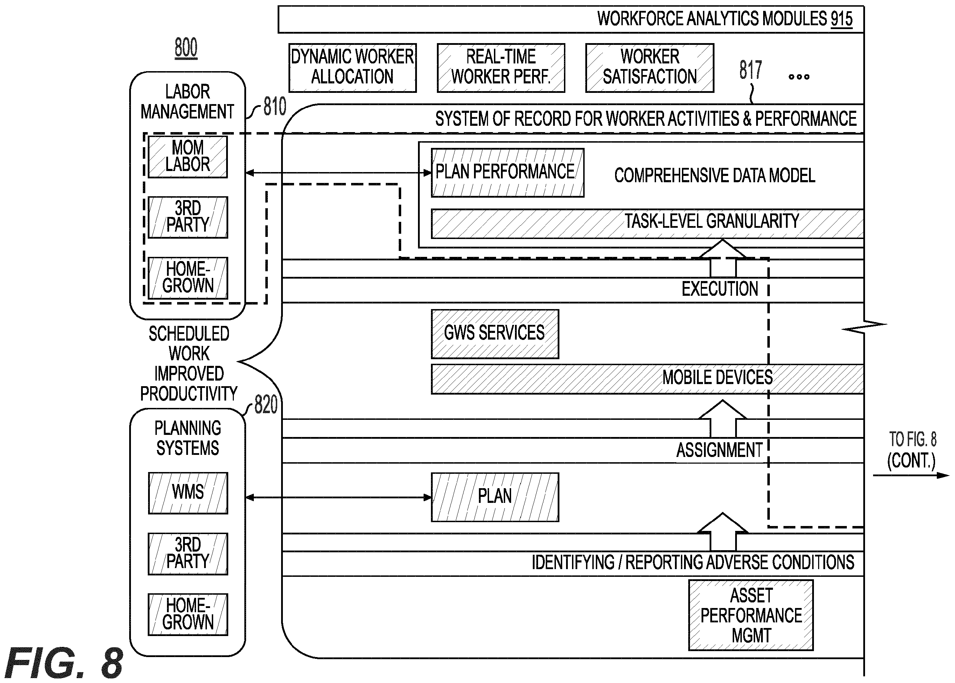

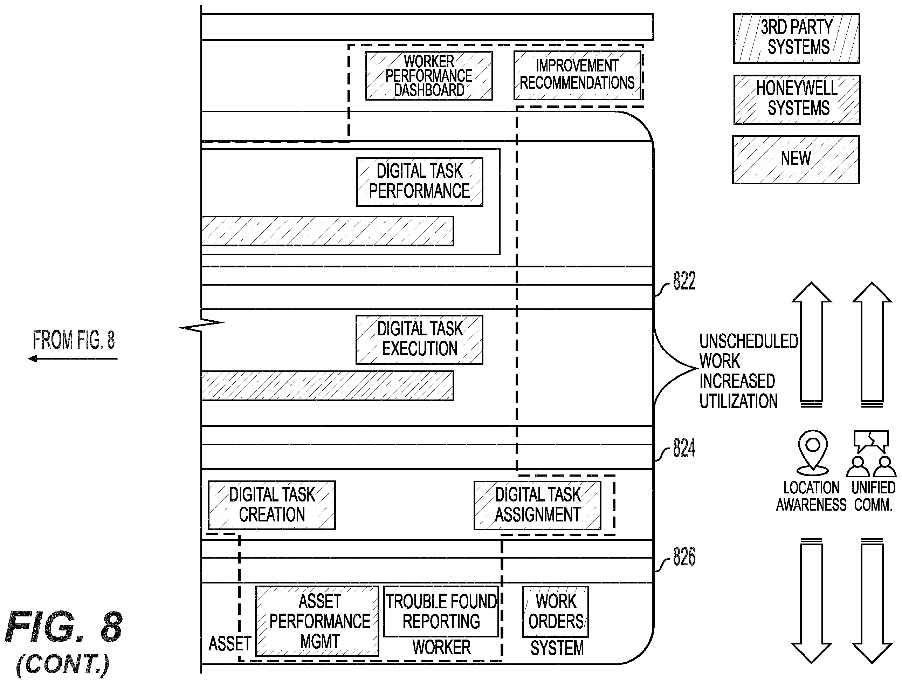

FIG. 8 is a diagram of architecture associated with of a connected warehouse system 800 of this disclosure. System 800 can include workforce analytic modules 815, including but not limited to modules for dynamic work allocation, real-time worker performance metrics, worker satisfaction, etc. Workforce analytic modules 815 can also include one or more worker performance dashboards 823 and improvement recommendations 825. Improvement recommendations 825 can be for training, rewarding, coaching, engagement, etc. opportunities to maximize worker retention, performance, and overall work operations

In certain aspects, worker performance dashboards 823 and improvement recommendations 825 can be updated (e.g., in real-time) by a system 817 of record for worker activities and performance. System 817 can be in communication with workforce analytic modules 815. System 817 can improve schedule worked productivity via labor management module 810 and planning systems module 820. Specifically, management module 810 can include one or more discrete components (e.g., components to manage manufacturing operations management (MOM) labor, 3rd party activities, as well as homegrown activities) that in real-time communicate with a comprehensive data model of system 817. The comprehensive data model of system 817 can include a plan performance module bi-directionally coupled to labor management module 810. The comprehensive data model of system 817 can also include modules with digital task performance and task-level granularity. In some aspects, the plan performance module can include a database of worker digital task performance and task-level granularity (e.g., showing discrete subtasks of a task or granular performance metrics of a respective worker task).

In practice, a layer 826 for identifying and reporting adverse conditions can be included in system 817. Layer 826 can include an asset performance manager (APM) as well as systems to manage worker orders. In some aspects, layer 826 can include an operation intel manager and trouble-found reporting system that collectively work to enable layer 826 to communicate with aspects of assignment layer 824 downstream thereof. Layer 826 can include a plan system in bi-directionally coupled to planning systems module 820, including but not limited to warehouse management systems (WMS), third party systems, and the like. The operation intel manager and trouble-found of assignment layer 826 can communicate with digital task creation and digital task assignment systems of assignment layer 824. Assignment layer 824 in turn can communicate with aspects of execution layer 822 downstream thereof.

Layer 822 can include or be coupled to one or more mobile devices (e.g., mobile devices of users and/or personnel associated therewith including employees, managers, and personnel of third parties). Layer 822 can also include guided work software (GWS) systems. In some aspects, the digital task creation and digital task assignment systems of assignment layer 824 can be in communication with the mobile devices of layer 822 as well as a digital task execution system of layer 822. In some examples, mobile devices of layer 822 as well as a digital task execution system of layer 822 can communicate with the task level granularity system, the plan performance system, and digital task performance system of the comprehensive data model of system 817 to dynamically update worker performance dashboard 823 and improvement recommendations 825.

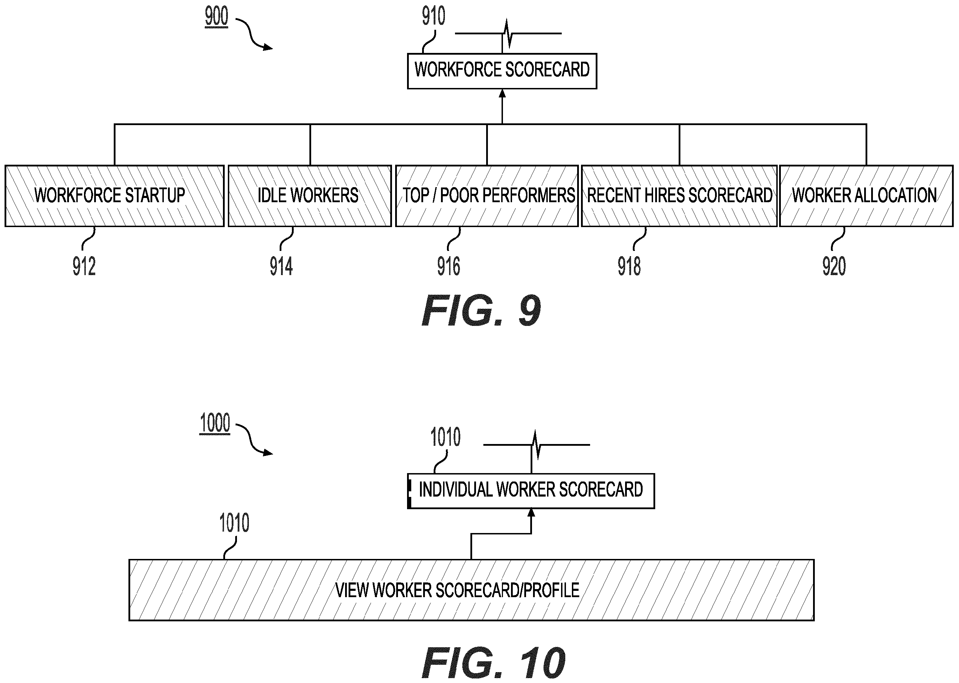

FIG. 9 depicts architecture 900 of a workforce scorecard dashboard 910 of a connected warehouse system of this disclosure. In some aspects, scorecard dashboard 910 can include objective information related to one or more worker performance parameters. For example, based on information from an insight module of the connected warehouse, scorecard dashboard 910 can present a smart warehouse score on a numeric scale or present a color rating summarizing workforce performance scores in real-time. It is understood that an insight module of or associated with scorecard dashboard 910 can include aspects of any herein disclosed connected warehouse, including connected warehouse system 900 and its warehouse system services, performance management system, LMS, gateway, and/or the like, whereby data can be aggregated from corresponding sensor devices, worker computing devices, and connected systems to calculate one or more worker performance scores.

Any of the herein disclosed computer systems can provide operation of the smart warehouse score system associated with scorecard dashboard 910. One or more databases associated with workers, tasks, teams of workers, the warehouse, and the like can be provided at the job site (e.g., warehouse) or remotely (e.g., via the cloud) for memory needs such as functions of scorecard dashboard 910. Sensor devices of one or more areas and/or assets of the warehouse may be connected therewith and/or with a corresponding insight module along with worker computing device actively sensing information from respective workers. Changes in scorecard dashboard 910 may reveal deltas or changes so that the system or system user (e.g., shift manager) can take action preemptively and/or in real-time in response to such changes and/or performance anomalies.

In some aspects, workforce startup module 912 can be included with scorecard dashboard 910. Scorecard 912 can in certain aspects be indicated in a worker dashboard, whereby notifications related to one or more anomalies can be transmitted to supervisors (e.g., if worker(s) did not start work after a scheduled start time following signing into a job site, or if worker(s) did not start one or more tasks after returning from a break, etc.). Module 912 can receive and aggregate data from the sensor devices of the respective job site (e.g., warehouse) as well as area(s) within the job site. Module 912 can also receive and aggregate data from worker the computing devices of or otherwise connected to workers (e.g., worker computing devices such as mobile devices or other personal computing devices, wearable biometric devices, smart badges, etc.). Module 912 can track one or more workers or one or more teams of workers to determine whether progress at the start of a task (e.g., at the beginning of a shift or returning from a break) is below, at, or exceeding task expectations so that performance can be optimized.

For example, at the beginning of a shift or returning from a break, it can be common for worker(s) to perform tasks at a rate slower or otherwise less efficient than an optimized and/or expected rate. The system can analyze the aggregated information and via module 912 present feedback so that the system and/or system user(s) can in real-time monitor task(s) to determine whether tasks at startup are below, at, or exceeding task expectations and corrective action(s) can be promptly taken. For example, a shift manager and/or another worker in a team of workers can be notified, or the respective worker herself can be notified, that startup task performance is below the expected rate and one or more corrective actions of solving problems of the respective worker can be promptly initiated. Corrective actions can include encouraging the respective worker (e.g., with incentivizing compensation, bonuses, etc.), providing a corrective task, inviting another user(s) to help the respective user, and the like. In some aspects, information of module 912 can be transmitted directly to shift managers as well as other managerial users (e.g., shift supervisor, site operations manager, etc.).

In some aspects, an idle worker scorecard 914 can be included with scorecard dashboard 910. Similar to module 912, scorecard 914 can receive and aggregate data from the sensor devices and the worker computing devices. Scorecard 914 can track one or more workers or one or more teams of workers to view all on-shift workers who have not scanned or otherwise provided a task update (e.g., worked tasks, scanned task, completed task, etc.) in a predetermined amount of time (e.g., the previous 5 minutes, the previous 10 minutes, the last hour, a duration of the current shift).

In an associated user interface, an idle worker dashboard view can be provided including the amount of time related to the task update and including visible filters. This amount of time can be automatically or manually updated by the end user (e.g., adjusted to current day, current week, current month, current year, or any previous period of time). In the associated user interface of scorecard 914, information related to idle workers can be readily presented including but not limited to the number of workers currently idle, of the number of workers who may be repeated idle workers, and a running calculation of total time lost to idle time across a period of time (e.g., the past day, the past week, the current shift, the past month, etc.). Scorecard 914 can also include a trend number of idle workers as well as predicted idle workers according to current information aggregated from corresponding sensor and worker computing devices in comparison to idle worker historical information.

In some aspects, a top / poor performer scorecard 916 can be included with scorecard dashboard 910. Similar to scorecards 912, 914, scorecard 916 can similarly receive and aggregate data from the sensor devices and worker computing devices. Scorecard 916 can identify outlier performers (top performers, poor performers) so that responsive action can be taken (e.g., rewarding action, encouragement action, etc.). In some aspects, such outlier performers can be determined by comparing performance parameters against others (e.g., in a peer comparison view to compare peers in a respective team, members of other teams, etc.). Performance parameters can include task type, worker level (e.g., seniority related to others, worker certifications, etc). In some aspects, scorecard 916 can include and continually provide dynamically update lists of top performers and poor performers (e.g., top 5 and bottom 5 workers) based on performance parameters such as overall shift performance, on-standard performance, effectiveness at a respective task or sub-task, as well as engagement.

In some aspects, a recent hire scorecard 918 can be included with scorecard dashboard 910. Similar to scorecards 912, 914, 916, scorecard 918 can similarly receive and aggregate data from the sensor devices and worker computing devices. Scorecard 918 can identify and provide insights for recently hired workers so that responsive action can be taken (e.g., provide onboarding training, training for a skill or task that the respective recent hire needs support with based on analytics associated with task performance by the respective recent hire). This is particularly advantageous since recent hires are typically the most likely to leave a company, scorecard 918 provides a prompt, efficient, and results-oriented solution to in real-time determine and present recent-hire worker performance insights and to both provide corrective actions as well as maintain levels of engagement and encouragement for recent hire retention.

In some aspects, a worker allocation scorecard 920 can be included with scorecard dashboard 910. Similar to scorecards 912, 914, 916, 918, scorecard 920 can similarly receive and aggregate data from the sensor devices and worker computing devices. Scorecard 920 can monitor and provide insights for worker allocation. In certain aspects, scorecard 920 can provide visibility related to which workers have arrived for shifts, how each department of a worksite is performing related to worker allocation and status of arrived workers, and present this information relative to expected worker allocation, expected worker performance, and/or status of related tasks. Upon monitoring and determining that allocation anomalies are present or trending to be present, corrective actions can be recommended and/or taken, including practical allocation adjustments to adapt to allocation variations as they occur. Other scorecards, modules, dashboards, and/or related databases are contemplated for use or inclusion with scorecard dashboard 910.

FIG. 10 depicts architecture 1000 of an individual scorecard dashboard 1010 of a connected warehouse system of this disclosure. In some aspects, scorecard dashboard 1010 can include objective information related to one or more individual worker performance parameters. For example, scorecard dashboard 1010 can present an individual worker score on a numeric scale or present a color rating summarizing workforce performance in real-time.

Any of the herein disclosed computer systems, including the connected warehouse systems, can provide operation of the individual worker score system associated with individual scorecard dashboard 1010. One or more databases associated with individual workers and related tasks, respective team(s) of individual worker(s), related warehouse(s), and the like can be provided at the job site (e.g., warehouse) or remotely (e.g., via the cloud) for memory needs such as functions of scorecard dashboard 1010. Sensor devices of one or more areas and/or assets of the warehouse may be connected therewith along with worker computing device actively sensing information from respective workers. Changes in scorecard dashboard 1010 may reveal deltas or changes so that the individual worker, the overall system or any other system user aside from the respective individual worker (e.g., an associated shift manager) can take action preemptively and/or in real-time in response to such changes and/or performance anomalies.

In some aspects, a scorecard dashboard 1012 to view individual workers scores can be included with scorecard dashboard 1010. Scorecard dashboard 1012 can receive and aggregate data from the sensor devices of the respective job site (e.g., warehouse) as well as area(s) within the job site. Scorecard dashboard 1012 can also receive and aggregate data from worker the computing devices of or otherwise connected to workers (e.g., worker computing devices such as mobile devices or other personal computing devices, wearable biometric devices, smart badges, etc.). Scorecard dashboard 1012 can track for individual workers task progress against task expectations, task performance, overall performance and the like. Other performance indicators tracked and used to determine individual performance metrics and related dynamic individual performance insights include but are not limited to overall performance against a predetermined plan (e.g., time worked versus number of units moved), "on standard" which is understood as time worked versus site goal per task (e.g., a KPI task target deviation, a task performance standard, etc.), percent effectiveness (e.g., time worked versus planned breaks), attendance, engagement (e.g., determined objectively from worker computing devices), clicks per hour by the individual worker, time spent with eyes on a display screen, etc. In some aspects, scorecard dashboard 1012 can also include aspects which are dimensioned by task or rate of a predetermined performance parameter (e.g., frequency of updating worker preferences, frequency that worker checks their performance score, frequency of worker's career trajectory, frequency of worker performing one or more of the same tasks.

Scorecard dashboard 1012 can also include aspects such as individual performance quality score, which can be determined based on objective performance quality parameters detected from worker computing devices and/or sensor devices. For example, each completed or ongoing tasks can receive a quality score, which can be tracked and presented by scorecard dashboard 1012.

In some aspects, scorecard dashboard 1012 can provide or otherwise present individual worker profiles to facilitate viewing worker task assignments in alignment with individual worker profiles, preferences, career incentives, career promotions, etc. Profile attributes, which can be tracked and used to populate worker profiles and related profile insights, include but are not limited to worker profile picture, name, salary, role, functional area, work schedule, days at a job, preferences, work groups, certifications, hours active, location preference, career trajectory, seniority, etc..

Scorecard dashboard 1012 can also include aspects such as individual worker satisfaction score, which can be determined based on objective satisfaction parameters detected from worker computing devices and/or sensor devices herein discussed metrics and/or insights determined in connection with scorecard dashboard 1012 as to engagement and performance. Individual worker satisfaction scores are particularly advantageous for determining and preemptively providing corrective actions for potential schedule delays based on the individual worker satisfaction score(s).

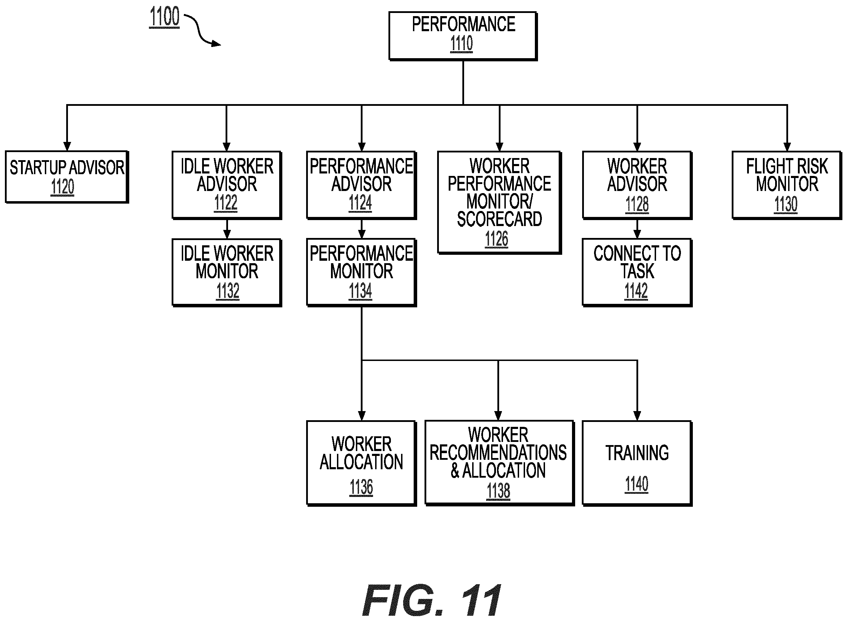

FIG. 11 depicts architecture 1100 of a performance scorecard dashboard 1110 of a connected warehouse system of this disclosure. In some aspects, scorecard dashboard 1110 can include objective information related to performance parameters. For example, scorecard dashboard 1110 can present an performance score on a numeric scale or present a color rating summarizing workforce performance in real-time.

The performance dashboard 1110 can include any herein described scores and/or dashboards and be viewable by a management user (e.g., a shift manager). However, other users are contemplated to view or otherwise access or use the performance dashboard 1110. For example, a startup advisor dashboard 1120 can be included similar to previously discussed workforce startup module 912. Dashboard 1120 can be used to analyze aggregated information from system connected worker computing devices and/or warehouse sensor devices and present feedback so that the system and/or system user(s) can in real-time monitor task(s) to determine whether tasks at startup are below, at, or exceeding task expectations and corrective action(s) and related insights can be promptly taken. Corrective actions can include encouraging the respective worker, providing a corrective task, inviting another user(s) to help the respective user, and the like.

An idle worker advisor dashboard 1122 can also be included similar to previously discussed idle worker scorecard 914. Dashboard 1122 can track one or more workers or one or more teams of workers to view all on-shift workers who have not scanned or otherwise provided a task update (e.g., worked tasks, scanned task, completed task, etc.) in a predetermined amount of time (E.g., the previous 5 minutes, the previous 10 minutes, the last hour, a duration of the current shift). Dashboard 1122 can include an idle worker monitor engine 1132 configured to actively monitor for workers who are performing below performance standards (e.g., worker(s) who have not scanned or completed task(s) in some predetermined time range). Engine 1132 can be configured to track and present insights such as impact of idle time per worker(s).

A performance advisor dashboard 1124 can also be included, similar to previously discussed scorecard 1016. Similar to scorecard 1016, dashboard 1124 can identify outlier performers (top performers, poor performers) so that responsive action can be taken (e.g., rewarding action, encouragement action, etc.) whereby outlier performers can be determined by comparing performance parameters against others (e.g., peers in a respective team, members of other teams, etc.). Performance parameters can include task type, worker level (e.g., seniority related to others, worker certifications, etc. Dashboard 1124 can include a worker performance monitor engine 1134 configured to actively monitor for workers who are performing in excess of or below performance standards. Engine 1134, in turn, can include worker allocation module 1136, worker recommendation module 1138, and worker training module 1140.

Module 1136 can be configured similar to scorecard 1020, whereby module 1136 can monitor and provide insights for worker allocation. In certain aspects, module 1136 can be used so that dashboard 1110 can provide worker allocation visibility (e.g., which workers have arrived for shifts, how each department of a worksite is performing related to worker allocation and status of arrived workers, etc.) and present worker allocation insights relative to expected worker allocation, expected worker performance, and/or status of related tasks. Upon monitoring and determining that allocation anomalies are present or trending to be present, corrective actions can be recommended and/or taken by corresponding worker allocation recommendation module 1138, including practical allocation adjustments to adapt to allocation variations as they occur. Other modules are contemplated, including but not limited to a training module 1140 configured to actively present recommended training protocols for worker allocation and/or improving worker performance.

In some aspects, scorecard 1016 can include and continually dynamically update lists of top performers and poor performers (e.g., top 5 and bottom 5 workers) based on performance parameters such as overall shift performance, on-standard performance, effectiveness at a respective task or sub-task, as well as engagement.

A worker performance monitor and/or scorecard dashboard 1126 can also be included, similar to previously discussed scorecard dashboard 1012. Dashboard 1126 can present information such as tracked individual workers task progress against task expectations, task performance, overall performance and the like. Other performance indicators used in dashboard 1126 tracked and used to determine individual performance metrics and related insights include but are not limited to overall performance against a predetermined plan (e.g., time worked versus number of units moved), "on standard", percent effectiveness, attendance, engagement (e.g., determined objectively from worker computing devices), clicks per hour by the individual worker, time spent with eyes on a display screen, etc. In some aspects, similar scorecard dashboard 1412, scorecard dashboard 1126 includes aspects which are dimensioned by task or rate of a predetermined performance parameter (e.g., frequency of updating worker preferences, frequency that worker checks their performance score, frequency of worker's career trajectory, frequency of worker performing one or more of the same tasks, etc.).

Scorecard dashboard 1126 can also include individual performance quality score as well as individual worker profiles so as to facilitate viewing worker task assignments in alignment with individual worker profiles, preferences, career incentives, career promotions, etc. Profile attributes, which can be tracked and used to populate worker profiles and related profile insights, include but are not limited to worker profile picture, name, salary, role, functional area, work schedule, days at a job, preferences, work groups, certifications, hours active, location preference, career trajectory, seniority, etc.

Scorecard dashboard 1126 can also include or be in communication with worker engagement advisor dashboard 1128. Dashboard 1128 can include aspects, such as logic and analytics, to determine individual worker satisfaction based on objective satisfaction parameters detected from worker computing devices and/or sensor devices to track worker engagement and performance. Based on insights determined by or in connection with dashboard 1128, a connect-to-task engine 1142 can prompt specific real-time recommendations for workers to get back on or otherwise improve task performance of one or more specific tasks.

Scorecard dashboard 1126 can also include or be in communication with schedule delay monitor 1130. Monitor 1130 in turn can include aspects, such as logic and analytics, to determine or otherwise present information related to workers, including high-value workers and low-value workers, who according to schedule delays scores and/or related schedule delay insights are potential schedule delays. In some aspects, schedule delay scores and/or related schedule delay insights can be calculated based on aggregated data measuring worker engagement and performance.

Aspects of FIGs. 1-11 are advantageous for measuring Worker assignment/task progress in contextually relevant dimensions, visualize in real-time, and alert users (e.g., supervisor(s) and/or stakeholder(s)) upon identified anomlous trend deviations from rates of worker KPIs.

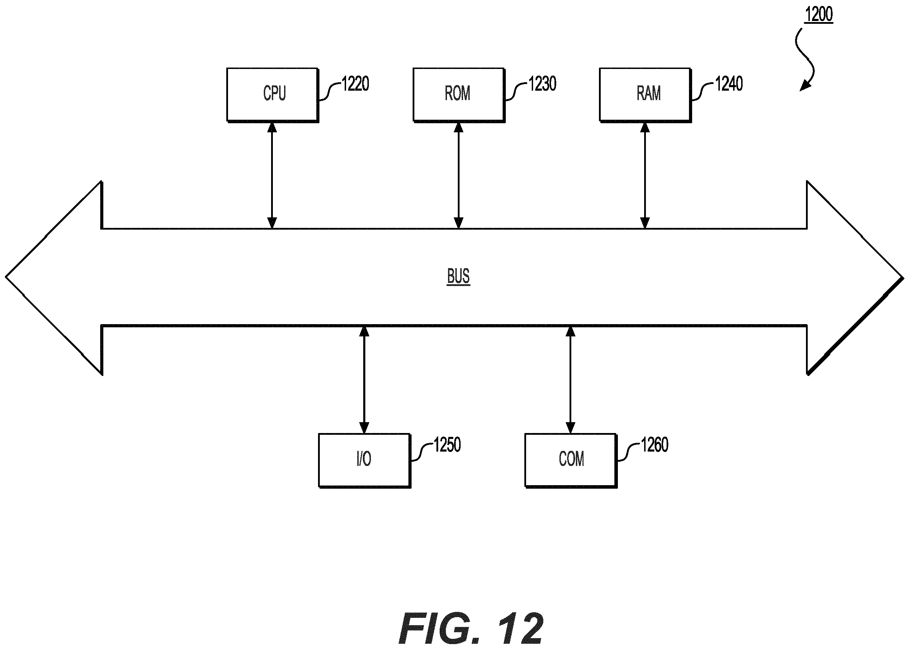

Various embodiments of the present disclosure (e.g., edge systems, gateway systems, operations centers, remote systems, warehouse systems, connected worker systems, etc.), as described above with reference to FIGs. 1-11 may be implemented using device 1200 in FIG. 12. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

As shown in FIG. 12, device 1200 may include a central processing unit (CPU) 1220. CPU 1220 may be any type of processor device including, for example, any type of special purpose or a general purpose microprocessor device. As will be appreciated by persons skilled in the relevant art, CPU 1220 also may be a single processor in a multi-core/multiprocessor system, such system operating alone, or in a cluster of computing devices operating in a cluster or server farm. CPU 1220 may be connected to a data communication infrastructure 1210, for example, a bus, message queue, network, or multi-core message-passing scheme.

Device 1200 may also include a main memory 1240, for example, random access memory (RAM), and may also include a secondary memory 1230. Secondary memory 1230, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 1230 may include other similar means for allowing computer programs or other instructions to be loaded into device 1200. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 1200.

Device 1200 may also include a communications interface ("COM") 1260. Communications interface 1260 allows software and data to be transferred between device 1200 and external devices. Communications interface 1260 may include a modem, a network interface (such as an Ethernet card), a communications port, a PCMCIA slot and card, or the like. Software and data transferred via communications interface 1260 may be in the form of signals, which may be electronic, electromagnetic, optical, or other signals capable of being received by communications interface 1260. These signals may be provided to communications interface 1260 via a communications path of device 1200, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. Device 1200 also may include input and output ports 1250 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems and methods of this disclosure can be cloud-based, multi-tenant solutions configured to deliver optimized work instructions tailored for specific vertical workflows utilizing an easy to deploy, scalable, and configurable data model and software suite to deliver performance insights and improve worker productivity.

The disclosure provides one or more user interface systems for smart worker performance scoring and evaluation of a job site (e.g., one or more warehouses), whereby information from sensors and/or connected worker computing devices may provide dynamic data about job performance (e.g., productivity of worker(s), task productivity, production productivity, etc.), a processor and database(s) for receiving and processing the dynamic data, and having a program that aggregates and analyzes the dynamic data for one or more categories of the one or more worker performance. The data analysis may determine performance scores for each of the one or more performance categories, and calculate an overall worker performance score. The worker performance score for each category of this disclosure may be displayed on a dashboard and/or related scorecards. In some aspects, one or more functions are used to calculate scores (e.g., assigning a coefficient factor to values of categories such as time on task, time between tasks, number of tasks completed, idle state, etc.). The coefficient factor may be determined from a comparison value based on some predetermined standard and/or worker performance historical data of the one or more categories. Any of the herein disclosed dashboards and related user interfaces may present worker performance scores and related details of the dynamic data for detecting and solving worker performance issues (e.g., recommended corrective actions) without changing the dashboard or the monitor.

The worker performance scores of this disclosure can include numerous scores and sub-scores, including performance scores, environmental scores related to the job site and/or areas of a job site (e.g., utility consumption, carbon footprint, emissions, etc.), health scores, safety scores, maintenance scores, job site asset scores, happiness scores, etc. Such scores are also advantageous for use in using trained machine learning models to predict performance impacts depending on trends of all such scores of this disclosure.

Other embodiments of the disclosure will be apparent to those skilled in the art from consideration of the specification and practice of the invention disclosed herein. It is intended that the specification and examples be considered as exemplary only, with a true scope and spirit of the invention being indicated by the following claims.

## Claims

1. A computer-implemented method for machine-learning based worker performance assessment and recommendations, the method comprising:
receiving, using at least one processor, a value of at least one worker performance metric for a worker;
receiving, using the at least one processor, a value of at least one worker performance parameter for the worker;
determining, using a trained machine-learning model, a worker score for the worker based on the value of the at least one worker performance metric and the value of the at least one worker performance parameter;
determining, using the trained machine-learning model, a target score for the worker based on the value of the at least one worker performance metric and the value of the at least one worker performance parameter;
determining, using the at least one processor, whether the worker score determined for the worker is less than, equal to, or greater than the target score determined for the worker; and
upon determining that the worker score is less than the target score, determining an instruction to perform a first action relative to the worker based on the machine-learning model, and outputting to a real-time dashboard of a display the instruction to perform a first action;
upon determining that the worker score is equal to or greater than the target score, determining an instruction to perform a second action relative to the worker based on the machine-learning model, and outputting to the real-time dashboard of the display the instruction to perform the second action.

2. The method of claim 1, wherein the at least one worker performance parameter is at least one factor that the trained machine-learning model identifies as one of a positive or negative contributor to the at least one worker performance metric.

3. The method of claim 2, wherein the at least one factor is one or more of worker experience, worker training, worker task preference, worker region preference, worker workload, weather data, economic data, and attrition rate.

4. The method of claim 3, wherein the at least one factor comprises a plurality of factors, and the factors of the plurality of factors that are identified as negative contributors to the at least one worker performance metric are identified, the step of performing an instruction to perform a first action and the step of performing an instruction to perform a second action including an instruction to address the identified factors.

5. The method of claim 1, wherein the instruction to perform the first action and the instruction to perform the second action are determined by the trained machine-learning model to maximize worker retention and productivity.

6. The method of claim 1, wherein the trained machine-learning model is configured to aggregate and analyze data from a plurality of sensor devices located throughout the warehouse and connected over a network and a plurality of worker computing devices, each worker computing device corresponding to at least one of a plurality of workers.

7. The method of claim 1, wherein the trained machine-learning model determines the plurality of worker performance metrics by aggregating and analyzing data from a plurality of connected warehouse service systems, a plurality of connected performance management systems, a connected labor management system (LMS), and a gateway device.

8. A computer system for machine-learning based worker performance assessment and recommendations, the computer system comprising:
a memory having processor-readable instructions stored therein; and
one or more processors configured to access the memory and execute the processor-readable instructions, which when executed by the one or more processors configures the one or more processors to perform a plurality of functions, including functions for:
receiving, using at least one processor, a value of at least one worker performance metric for a worker;
receiving, using the at least one processor, a value of at least one worker performance parameter for the worker;
determining, using a trained machine-learning model, a worker score for the worker based on the value of the at least one worker performance metric and the value of the at least one worker performance parameter;
determining, using the trained machine-learning model, a target score for the worker based on the value of the at least one worker performance metric and the value of the at least one worker performance parameter;
determining, using the at least one processor, whether the worker score determined for the worker is less than, equal to, or greater than the target score determined for the worker; and
upon determining that the worker score is less than the target score, determining an instruction to perform a first action relative to the worker based on the machine-learning model, and outputting to a real-time dashboard of a display the instruction to perform a first action;
upon determining that the worker score is equal to or greater than the target score, determining an instruction to perform a second action relative to the worker based on the machine-learning model, and outputting to the real-time dashboard of the display the instruction to perform the second action.

9. The system of claim 8, wherein the at least one worker performance parameter is at least one factor that the trained machine-learning model identifies as one of a positive or negative contributor to the at least one worker performance metric.

10. The system of claim 9, wherein the at least one factor is one or more of worker experience, worker training, worker task preference, worker region preference, worker workload, weather data, economic data, and attrition rate.

11. The system of claim 10, wherein the at least one factor comprises a plurality of factors, and the factors that are identified as negative contributors to the at least one worker performance metric are identified, the step of performing an instruction to perform a first action and the step of performing an instruction to perform a second action including an instruction to address the identified factors.

12. The system of claim 8, wherein the instruction to perform the first action and the instruction to perform the second action are determined by the trained machine-learning model to maximize worker retention and productivity.

13. The system of claim 8, wherein the trained machine-learning model is configured to aggregate and analyze data from a plurality of sensor devices located throughout the warehouse and connected over a network and a plurality of worker computing devices, each worker computing device corresponding to at least one of a plurality of workers.

14. The system of claim 8, wherein the trained machine-learning model determines the plurality of worker performance metrics by aggregating and analyzing data from a plurality of connected warehouse service systems, a plurality of connected performance management systems, a connected labor management system (LMS), and a gateway device.

15. A non-transitory computer-readable medium containing instructions for machine-learning based worker performance assessment and recommendations, the instructions comprising:
receiving, using at least one processor, a value of at least one worker performance metric for a worker;
receiving, using the at least one processor, a value of at least one worker performance parameter for the worker;
determining, using a trained machine-learning model, a worker score for the worker based on the value of the at least one worker performance metric and the value of the at least one worker performance parameter;
determining, using the trained machine-learning model, a target score for the worker based on the value of the at least one worker performance metric and the value of the at least one worker performance parameter;
determining, using the at least one processor, whether the worker score determined for the worker is less than, equal to, or greater than the target score determined for the worker; and
upon determining that the worker score is less than the target score, determining an instruction to perform a first action relative to the worker based on the machine-learning model, and outputting to a real-time dashboard of a display the instruction to perform a first action;
upon determining that the worker score is equal to or greater than the target score, determining an instruction to perform a second action relative to the worker based on the machine-learning model, and outputting to the real-time dashboard of the display the instruction to perform the second action.
